# FASCICULE DE BREVET EUROPEEN

(11) **EP 2 153 076 B1**
(45) Date de publication et mention de la délivrance du brevet: **29.07.2015**
(21) Numéro de dépôt: 08805860.7
(22) Date de dépôt: 27.05.2008
(51) Int. Cl.: F16C 19/52, F16C 41/00, G01P 3/44

(54) **DISPOSITIF DE ROULEMENT INSTRUMENTE A INDEXATION**
MIT EINER INDEXIERUNG AUSGESTATTETE TRAGEVORRICHTUNG
INDEXATION INSTRUMENTED BEARING DEVICE

(30) Priorité: 12.06.2007 FR 0755693
(43) Date de publication de la demande: 17.02.2010
(73) Titulaire: Aktiebolaget SKF, 415 50 Göteborg (SE)
(72) Inventeur: DEBRAILLY, Franck, F-37380 Nouzilly (FR); SAUSSET, Vincent, F-37190 Azay-Le-Rideau (FR)
(74) Mandataire: Dossmann, Gérard
(86) Numéro de dépôt international: PCT/FR2008/050916
(87) Numéro de publication internationale: WO 2009/004198

(56) Documents cités:
- EP-A- 1 452 753
- EP-A- 1 662 637
- WO-A-02/052280
- WO-A-03/071284
- DE-A1- 3 910 498
- FR-A- 2 804 479

## Description

La présente invention concerne le domaine des paliers à roulement instrumentés munis d'un ensemble de détection des paramètres de rotation tels que la position angulaire, le sens de rotation, la vitesse, l'accélération.

De tels roulements instrumentés et de tels montages sont bien connus, notamment par le document FR 2 754 903. Ces roulements instrumentés peuvent être utilisés, par exemple, pour le pilotage de moteurs électriques de type synchrone, par exemple un moteur sans balais couramment appelé moteur « brushless » en langue anglaise.

Un tel moteur sans balais comprend classiquement un stator externe constitué par exemple de trois ou six bobines connectées en triangle ou en étoile, et un rotor constitué d'un ou de plusieurs aimants permanents.

L'ensemble de détection constitué par un bloc capteur et un élément codeur fournit alors au système d'asservissement du moteur toutes les informations utiles, en particulier la vitesse de rotation et la position des pôles du rotor par rapport à ceux du stator. Le système d'asservissement assure la commutation du courant dans les enroulements ou phases du stator, c'est-à-dire alimente successivement les bobines du moteur, pour créer un champ magnétique tournant permettant la rotation dudit moteur.

Dans les montages conventionnels, le système capteur-codeur est indépendant des paliers à roulement grâce auquel le rotor tourne dans le stator concentriquement à ce dernier. A cet égard on pourra se référer à la demande de brevet EP-A2-1 662 637.

De manière connue en soi, le codeur se présente sous la forme d'une bague multipolaire dont le nombre de pôles dépend du nombre de pôles du moteur à piloter. Le codeur coopère avec un capteur délivrant une tension de sortie variant à chaque changement de polarité de la bague du codeur et délivrant ainsi un signal caractéristique de type carré.

Si on veut connaître la position des pôles du rotor par rapport à ceux du stator au moyen du roulement instrumenté, on comprendra qu'il faut, lors du montage du rotor dans le stator, que :
- le capteur soit orienté angulairement par rapport aux pôles du stator,
- le codeur soit orienté angulairement par rapport au capteur,
- le codeur soit orienté angulairement par rapport aux pôles du rotor.

Ces opérations sont relativement délicates à réaliser dans la mesure où elles doivent être effectuées simultanément durant le montage du rotor dans le stator. On doit en effet avoir recours à des index mécaniques pour assurer simultanément, lors du montage du roulement dans le moteur électrique, une orientation angulaire relative adéquate des éléments précités de manière à pouvoir exploiter ultérieurement les signaux du roulement.

Or, l'utilisation de tels index mécaniques ne permet pas d'obtenir un positionnement particulièrement précis du ou des éléments capteurs par rapport aux phases du stator du moteur en vue d'obtenir un fonctionnement optimal de celui-ci.

De façon à supprimer l'opération d'indexation du codeur par rapport au capteur lors du montage du moteur, il a été proposé, dans le brevet français FR 2 804 479, un dispositif de palier à roulement instrumenté comprenant des moyens de maintien temporaires de l'indexation angulaire de l'élément codeur par rapport à l'élément capteur qui sont actifs pendant le transport, la manipulation et le montage du palier à roulement jusqu'à sa fixation à demeure dans son logement et sur l'arbre du moteur. On maintient donc la préindexation de l'élément codeur par rapport à l'élément capteur durant le montage du palier à roulement dans le moteur.

Ce dispositif présente toutefois l'inconvénient de ne pas permettre une modification de la position angulaire relative du ou des éléments capteur une fois que le palier à roulement est disposé sur l'arbre sur lequel il est destiné à être monté. En effet, lors du montage du palier à roulement instrumenté sur l'arbre, il peut être nécessaire d'optimiser le positionnement angulaire relatif de ces éléments pour obtenir un fonctionnement optimal du moteur.

Le document EP 1 452 753 A1 divulgue un dispositif de roulement instrumenté selon le préambule de la revendication 1 de l'invention présente.

La présente invention vise à prévoir un dispositif de roulement instrumenté apte à permettre, lors du montage du roulement dans un moteur électrique, un réglage particulièrement précis de la position angulaire relative du ou des éléments capteur par rapport aux phases du stator du moteur.

La présente invention a encore pour but de prévoir un dispositif de roulement instrumenté disposé à la place d'un des deux paliers à roulement traditionnellement utilisé, évitant ainsi le montage d'un ensemble capteur-codeur séparé dans le moteur.

L'invention présente est définie par les revendications 1 et 10, entre autres, le dispositif de roulement instrumenté comprend une bague tournante, une bague non tournante, et un ensemble de détection de paramètres de rotation muni d'un bloc comprenant au moins un premier élément pour la détection des paramètres de rotation, d'un support du bloc monté sur l'une des bagues, et d'un second élément monté sur l'autre bague en regard du premier élément. Les premier et second éléments sont mobiles à rotation l'un relativement à l'autre autour d'un axe du dispositif. Le bloc est monté à l'intérieur du support en étant mobile angulaire par rapport audit support autour de l'axe en vue d'une immobilisation de la position angulaire relative du bloc et du support dans une position de réglage choisie.

Dans une variante de réalisation, les premier et second éléments sont respectivement des éléments capteur et codeur, le support étant fixé sur la bague non tournante. La bague non tournante est la bague extérieure et la bague tournante est la bague intérieure.

Alternativement, les premier et second éléments sont respectivement des éléments codeur et capteur, le support étant fixé sur la bague tournante. La bague non tournante est la bague intérieure et la bague tournante est la bague extérieure.

Le dispositif présente l'avantage de permettre un ajustement de la position angulaire relative du ou des éléments capteur une fois que le palier à roulement est disposé sur l'arbre sur lequel il est destiné à être monté. En effet, lors du montage du palier à roulement instrumenté sur l'arbre, il peut être nécessaire d'optimiser le positionnement angulaire relatif de ces éléments pour obtenir un fonctionnement optimal du moteur.

Ainsi, il devient possible d'obtenir l'immobilisation angulaire du support et du bloc capteur ou codeur sans qu'il soit nécessaire de prévoir d'organe additionnel. En d'autres termes, l'utilisation du support pour former les moyens d'indexation angulaire permet l'obtention d'un palier à roulement particulièrement compact et économique.

Dans un mode de réalisation, le support comprend une portion axiale pour le centrage du bloc à l'intérieur du support, un rebord replié vers l'intérieur pour obtenir au moins la solidarisation axiale du bloc et du support.

Dans un mode de réalisation, le rebord replié comprend localement dés protubérances en saillie vers l'intérieur formant les moyens d'indexation angulaire.

De préférence, le bloc comprend des encoches aptes à coopérer avec les protubérances formées à partir du rebord. Le bloc capteur ou codeur peut être de forme générale annulaire et comprendre une portion tronconique pourvue des encoches.

Dans un mode de réalisation, la bague, prévue pour le montage du support, comprend une rainure ménagée dans l'alésage de ladite bague et apte à permettre la fixation du bloc capteur sur la bague non tournante.

Le centrage et le positionnement axial du bloc capteur ou codeur peuvent être effectués uniquement grâce à la rainure de la bague non tournante du roulement prévue initialement pour le montage d'un joint d'étanchéité.

Dans un mode de réalisation, le bloc capteur ou codeur est pourvu d'une portion annulaire interne venant former un passage étroit avec une surface radiale frontale de la bague tournante, et d'une portion radiale disposée entre la portion annulaire interne et la portion annulaire externe et délimitant un espace annulaire étanche pour un élément capteur ou codeur.

Selon l'invention, le bloc capteur est monté à l'intérieur du support en étant mobile angulaire par rapport audit support autour de l'axe. L'ensemble de détection comprend également des moyens pour une indexation angulaire aptes à immobiliser la position angulaire relative du bloc capteur et du support, lorsque le bloc capteur est positionné angulairement par rapport à la bague tournante dans une position choisie.

L'invention concerne également un moteur électrique de type synchrone comprenant un dispositif de roulement instrumenté tel que défini précédemment.

Selon la revendication 10, après montage sur l'arbre, on fait tourner le bloc à l'intérieur du support jusqu'à ce qu'à obtenir un positionnement relatif angulaire choisi du premier élément et de la bague associée, puis on solidarise angulairement le bloc et le support.

Dans un mode de mise en oeuvre, on solidarise angulairement le bloc et le support par déformation mécanique d'une portion axiale du support pour former des protubérances de fixation du bloc.

Avantageusement, avant montage sur l'arbre, on déforme légèrement la portion axiale du support pour former un rebord replié apte à solidariser axialement le bloc et le support tout en autorisant le déplacement angulaire relatif dudit bloc et du support.

Dans un mode de mise en oeuvre, on monte le dispositif sur un arbre d'un moteur électrique de type synchrone comportant un rotor et un stator.

De préférence, avant la solidarisation angulaire du bloc et du support, on entraîne en rotation le moteur électrique par un organe d'entraînement extérieur, on recueille les signaux émis par le stator du moteur et par le ou les premiers éléments pour la détection des paramètres de rotation du dispositif de roulement, on compare les signaux émis, on calcule l'angle de décalage entre les signaux émis par le stator du moteur et les signaux émis par le ou les premiers éléments pour la détection des paramètres de rotation, et on fait tourner le bloc à l'intérieur du support d'une valeur égale à l'angle de décalage déterminé.

L'invention sera mieux comprise à l'étude de la description détaillée de modes de réalisation pris à titre d'exemple nullement limitatifs et illustrés par les dessins annexés, sur lesquels :
- la figure 1 est une vue en perspective d'un palier à roulement instrumenté selon un premier mode de réalisation de l'invention avant indexation angulaire,
- la figure 2 est une vue en coupe axiale du palier à roulement instrumenté de la figure 1,
- la figure 3 est une vue en perspective d'un palier à roulement instrumenté selon un premier mode de réalisation de l'invention après indexation angulaire,
- la figure 4 est une vue en coupe axiale du palier à roulement instrumenté de la figure 3,
- la figure 5 est une est une vue de face en élévation d'un moteur électrique équipé d'un palier à roulement selon un premier mode de réalisation de l'invention,
- la figure 6 est une vue en coupe axiale du moteur électrique de la figure 5,
- la figure 7 est une vue schématique de signaux émis par le moteur électrique des figures 5 et 6 et par des éléments capteurs du palier à roulement,
- la figure 8 est une vue en perspective d'un palier à roulement instrumenté selon un second mode de réalisation de l'invention après indexation angulaire, et
- la figure 9 une vue en coupe axiale du palier à roulement instrumenté de la figure 8.

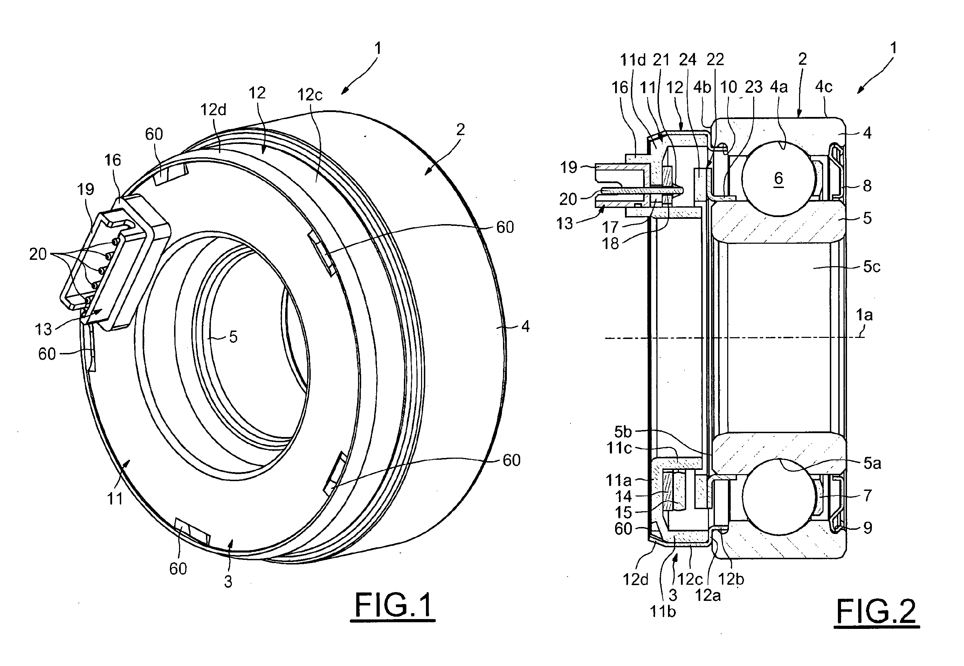

Comme on peut le voir sur les figures 1 à 4, le palier à roulement instrumenté 1, d'axe la, comprend un roulement 2 et un ensemble de détection 3 de paramètres de rotation associé au roulement 2.

Le roulement 2 comprend une bague non tournante 4 extérieure, une bague tournante 5 intérieure, une rangée d'éléments roulants 6, ici des billes, une cage 7 de maintien de l'espacement circonférentiel régulier des éléments roulants 6 et un flasque d'étanchéité 8 fixé sur la bague non tournante 4 et formant un passage étroit avec une portée axiale de la bague tournante 5.

Les bagues 4 et 5 comprennent chacune un chemin de roulement 4a, 5a, respectivement sur leur alésage et sur leur surface extérieure axiale. Les chemins de roulement 4a et 5a présentent une forme toroïdale et peuvent être formés par usinage d'une portion de tube ou d'une ébauche annulaire.

La bague extérieure 4 comprend également deux rainures 9 et 10, adjacentes à des surfaces frontales radiales de ladite bague extérieure 4. Les rainures 9 et 10 sont symétriques entre elles par rapport à un plan passant par le centre les éléments roulants 6. La rainure 9 permet la fixation du flasque d'étanchéité 8.

Les bagues 4 et 5 sont symétriques par rapport à un plan passant par le centre des éléments roulants 6. Les bagues 4 et 5 comprennent chacune une surface radiale frontale 4b, 5b du côté de la rainure 10. Les surfaces radiales frontales 4b et 5b sont sensiblement coplanaires. Du côté opposé, les bagues 4 et 5 peuvent également comprendre chacune une surface radiale frontale, ces surfaces étant sensiblement coplanaires. La bague 5 comprend un alésage cylindrique 5c et la bague 4 comprend une surface extérieure axiale cylindrique 4c. La bague non tournante 4 et la bague tournante 5 sont concentriques.

L'ensemble de détection 3 est fixé sur la bague non tournante 4 extérieure. Il présente un encombrement radial inférieur à celui du roulement 2. En d'autres termes, l'ensemble de détection 3 présente une surface extérieure de diamètre inférieur à celui de la surface extérieure 4c de la bague extérieure 4 et un alésage de diamètre supérieur à l'alésage 5c de la bague intérieure 5.

L'ensemble de détection 3 comprend principalement un bloc capteur 11, un support 12 du bloc capteur, un connecteur 13 et une carte de circuit imprimé 14.

Le bloc capteur 11 présente une forme générale annulaire à section en U et comprend une branche ou portion radiale 11a disposée entre une branche ou portion axiale de grand diamètre 11b et une branche ou portion axiale de petit diamètre 11c. La branche axiale de petit diamètre 11c présente une longueur inférieure à celle de la branche axiale de grand diamètre 11b. La branche axiale de grand diamètre 11b est en appui axial contre la surface radiale frontale 4b de la bague non tournante 4, par l'intermédiaire du support 12, comme cela sera décrit plus en détail par la suite.

La branche axiale de petit diamètre 11c vient former un passage étroit avec la face frontale radiale 5b de la bague intérieure 5. Le bloc capteur 11 définit un espace annulaire ouvert en direction du roulement 2. Plus précisément, l'espace annulaire est délimité par la portion axiale de grand diamètre 11b, la portion axiale de petit diamètre 11c c et la portion radiale 11a reliant lesdites portions. Avantageusement, on utilise pour la fabrication du bloc capteur 11 une matière synthétique, par exemple du polybutylène tétraphtalate (PBT).

La carte de circuit imprimé 14 est disposée dans le fond dudit espace annulaire en contact avec la portion radiale 11a du bloc capteur 11. La carte de circuit imprimé 14 supporte au moins un élément capteur 15, par exemple une cellule magnétosensible du type à effet Hall. Dans ce mode de réalisation, l'ensemble de détection 3 comporte trois capteurs 15, un seul étant visible sur les figures 1 à 4.

Le bloc capteur 11 comprend en outre un élément de positionnement 16 destiné à coopérer avec le connecteur 13. L'élément de positionnement 16 se présente sous la forme d'un parallélépipède creux délimitant un espace rectangulaire dans lequel est disposé le connecteur 13. L'élément de positionnement 16 est en saillie axiale par rapport à la portion radiale 11a du bloc capteur 11, en direction opposée au roulement 2. L'élément de positionnement 16 occupe un secteur angulaire limité, contrairement au reste du bloc capteur 11 annulaire. L'élément de positionnement 16 s'étend axialement sur une longueur nettement inférieure à celle du connecteur 13 et sert de guidage lors du montage dudit connecteur 13. L'élément de positionnement 16 définit ainsi un logement ouvert pour le connecteur 13.

Ce logement est complété par une ouverture 17 ménagée de façon traversante à travers la portion radiale 11a du bloc capteur 11 et débouchant ainsi dans l'espace où est disposée la carte de circuit imprimé 14. Des trous 18 sont prévus dans la carte de circuit imprimé 14, de façon à venir en regard de l'ouverture 17 une fois la carte mise en place. Le bloc capteur 11 peut être obtenu par moulage par injection d'un matériau synthétique.

Le connecteur 13 comprend une partie isolante 19 et une pluralité de broches 20 conductrices. La partie isolante 19 présente une forme globale de parallélépipède rectangle insérée entre l'élément de positionnement 16 du bloc capteur 11 et en contact avec la paroi radiale 11a. La partie isolante 19 est ouverte sur sa face radiale opposée à la paroi radiale 11a du bloc capteur 11 pour permettre l'insertion d'une fiche électrique.

Les broches 20, fixées à demeure dans une paroi radiale de fond de la partie isolante 19, sont en saillie de part et d'autre de ladite paroi radiale. Les broches 20 traversent l'ouverture 17 ménagée dans la paroi radiale 11a et les trous 18 ménagés dans la carte de circuit imprimé 14 et sont légèrement en saillie au-delà de la carte de circuit imprimé 14 tout en étant fixés à celles-ci par une soudure 21, par exemple du type à l'étain. Les broches 20 du connecteur 12 forment ainsi une liaison mécanique axiale entre la partie isolante 19 du connecteur 13 d'un côté de la paroi radiale 11a et la carte de circuit imprimé 14 de l'autre côté. La partie isolante du connecteur 19 et la carte de circuit imprimé sont donc maintenues axialement en contact avec ladite portion radiale 11a qui forme une cloison de séparation.

Les soudures 21 et les broches 20 assurent ainsi une double fonction de liaison électrique pour la transmission de signal en provenance des capteurs 15 ou d'un circuit électronique de traitement d'une part, et de liaison mécanique d'autre part, pour maintenir ensemble le connecteur 13, le bloc capteur 11 et la carte de circuit imprimé 14.

L'ensemble de détection 3 comprend également un élément codeur 22 fixé sur la bague intérieure 5. Plus précisément, l'élément codeur 22 comprend un support 23, par exemple une coupelle en tôle à section en L emmanchée sur une surface extérieure radiale de la bague tournante 5, axialement du côté de l'ensemble de détection 3. Le support 23 comprend une portion axiale emmanchée sur la surface extérieure radiale de la bague tournante 5 et une portion radiale dirigée vers l'extérieur à partir de la portion axiale.

L'élément codeur 22 se complète par une partie active 24 fixée, par exemple par surmoulage, sur la portion radiale du support 23. La partie active 24 peut se présenter sous la forme d'un anneau multipolaire, par exemple en plasto-ferrite. On choisira le nombre de pôles de la partie active 24 comme un multiple du nombre de pôles du moteur dans lequel le palier à roulement 1 est destiné à être monté.

La partie active 24 est légèrement en saillie axiale par rapport à la bague tournante 5 et est radialement disposée dans l'espace délimité par les portions axiales de grand diamètre 11b et de petit diamètre 11c du bloc capteur 11. La partie active 24 est séparée des éléments capteurs 15 par un faible entrefer axial. Lors de la rotation de la bague tournante 5 par rapport à la bague non tournante 4, la partie active 24 du codeur est entraîné en rotation autour de l'axe la et défile à rotation devant le ou les éléments capteurs 15.

A titre de variante, on pourrait bien entendu prévoir un entrefer radial avec un ou des capteurs 15 disposés à l'intérieur ou à l'extérieur de la partie active 24.

Le support 12 du bloc capteur se présente sous la forme d'une coupelle annulaire réalisée en matière métallique. Il comprend une paroi radiale 12a en contact avec la surface frontale radiale 4b de la bague non tournante 4 et avec l'extrémité libre de la branche axiale de grand diamètre 11b du bloc capteur 11. En d'autres termes, la portion radiale 12a est disposée axialement entre le bloc capteur 11 et la bague non tournante 4.

La paroi radiale 12a se prolonge sur son bord interne par un rebord 12b axial qui est emmanché à force dans l'entrée de la rainure 10 de la bague non tournante 4. Bien entendu, on conçoit aisément, qu'en variante, le rebord 12b pourrait également être serti à l'intérieur de la rainure 10, et ainsi être replié vers l'extérieur. Le rebord 12b axial et la rainure 10 permettent la fixation axiale du support 12, et plus généralement de l'ensemble de détection 3, sur la bague non tournante 4.

Le support 12 comprend également une portion axiale 12c cylindrique s'étendant, à partir du bord externe de la partie radiale 12a, axialement à l'opposé du rebord 12b, i.e. à l'opposé du roulement 2. La portion cylindrique 12c délimite un logement à l'intérieur duquel est monté le bloc capteur 11 avec un léger jeu radial (non représenté) pour permettre un bon centrage dudit bloc capteur à l'intérieur de la portion cylindrique 12c tout en autorisant le déplacement angulaire du bloc capteur 11 par rapport au support 12 autour de l'axe la. La portion axiale 12c présente une dimension axiale sensiblement égale à celle du bloc capteur 11.

La portion axiale 12c du support 12 forme une portion pour le centrage du bloc capteur 11, la portion radiale 12a constituant une surface d'arrêt pour ledit bloc.

Comme cela est illustré sur les figures 1 et 2, de façon à réaliser la retenue axiale du bloc capteur à l'intérieur du support 12, l'extrémité axiale libre de la portion axiale 12c est légèrement déformée à l'oblique vers l'intérieur de manière à former un rebord 12d replié en concordance de forme avec une portion tronconique 11d de raccordement reliant la branche axiale de grand diamètre 11b et la portion radiale 11a. Une fois le rebord 12d rabattu contre la portion tronconique 11d, la retenue axiale du bloc capteur 11 à l'intérieur du support 12 est réalisée. Dans cette position, le bloc capteur 11 reste mobile angulairement par rapport au support 12 autour de l'axe 1a.

En d'autres termes, avec le pliage du rebord 12d après l'insertion du bloc capteur 11, on a effectué une légère déformation radiale de l'extrémité libre de la portion axiale 12c de manière à ce que le rebord 12d replié forme un moyen de retenue axiale du bloc capteur à l'intérieur du support 12. Dans cet état, le palier à roulement 1 peut être manipulé, transporté, et monté en éliminant le risque de désolidarisation axiale des éléments le constituant.

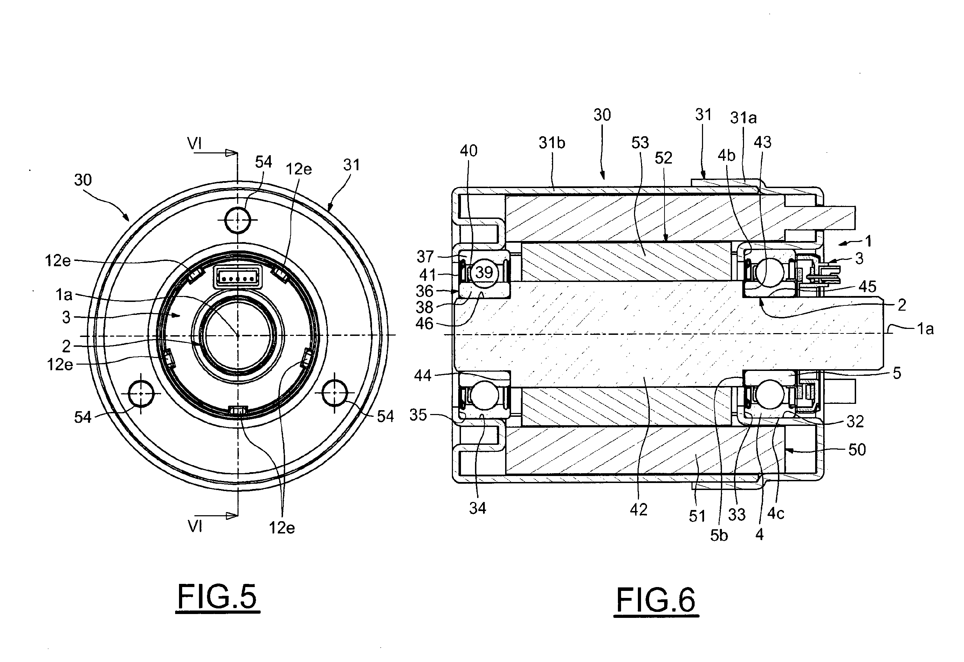

Sur les figures 5 et 6, le palier à roulement 1 est destiné à être monté dans un moteur électrique par exemple de type synchrone du type sans balais. Le moteur électrique qui est représenté de façon très schématique est référencé 30 dans son ensemble et comprend un carter 31 réalisé en deux parties 31a, 31b s'emboîtant axialement l'une par rapport à l'autre. La partie 31a est pourvue à une extrémité d'un alésage 32 limité d'un côté par un épaulement 33 prévu pour recevoir le roulement 1 avec la bague non tournante 4 extérieure dont la surface extérieure 4c vient en contact avec l'alésage 32 et dont la surface radiale frontale 4b vient en contact avec l'épaulement 33.

D'une façon identique, la seconde partie 31b du carter 31 est pourvue d'un alésage 34 prévu pour recevoir un palier à roulement 36 et limité d'un côté par un épaulement 35. Le palier à roulement 36 comprend une bague non tournante 37 extérieure, une bague tournante 38 intérieure, une rangée d'éléments roulants 39, ici des billes, une cage 40 de maintien de l'espace circonférentiel régulier des éléments roulants 39, et un flasque d'étanchéité 41 fixé sur la bague non tournante à l'intérieur d'une rainure (non référencée) de ladite bague et formant passage étroit avec une portée axiale de la bague tournante 38. La surface extérieure de la bague non tournante 37 extérieure vient en contact avec l'alésage 34, une surface radiale frontale de ladite bague venant quant à elle en contact avec l'épaulement 35.

Le moteur 30 comprend également un arbre tournant 42 se terminant à chaque extrémité axiale par un épaulement 43, 44 suivi d'une portion cylindrique 45, 46 de plus faible diamètre. L'alésage de la bague tournante 5 du palier 1 à roulement est reçu sur la portion cylindrique 45, la surface radiale frontale 5b venant en appui contre l'épaulement 43. D'une façon similaire, l'alésage de la bague non tournante 38 du palier à roulement 36 est reçu sur la portion cylindrique 46, une surface frontale radiale de ladite bague venant en appui contre l'épaulement 44.

Le moteur 30 comprend encore un stator 50 solidaire du carter 30 et pourvu d'une pluralité de pièces polaires 51 comportant un bobinage, et un rotor 52 pourvu d'une pluralité d'aimants permanents 53 et solidaire de l'arbre 42. Le stator 50 et le rotor 52 sont disposés de façon que les aimants 53 du rotor défilent à rotation avec un faible entrefer radial devant les pièces polaires 51 du stator. Le moteur 30 comprend également des bornes 54 de connexion, ici au nombre de trois, reliées aux bobinages des pièces polaires 51 du stator 50.

Pour procéder au réglage du palier 1 à roulement instrumenté, on procède de la manière suivante. Après avoir logé le palier dans l'alésage 32 du carter 30 jusqu'à ce que la bague extérieure 4 soit en contact avec l'épaulement 33, on procède au réglage du positionnement angulaire relatif du bloc capteur 11 et du support 12.

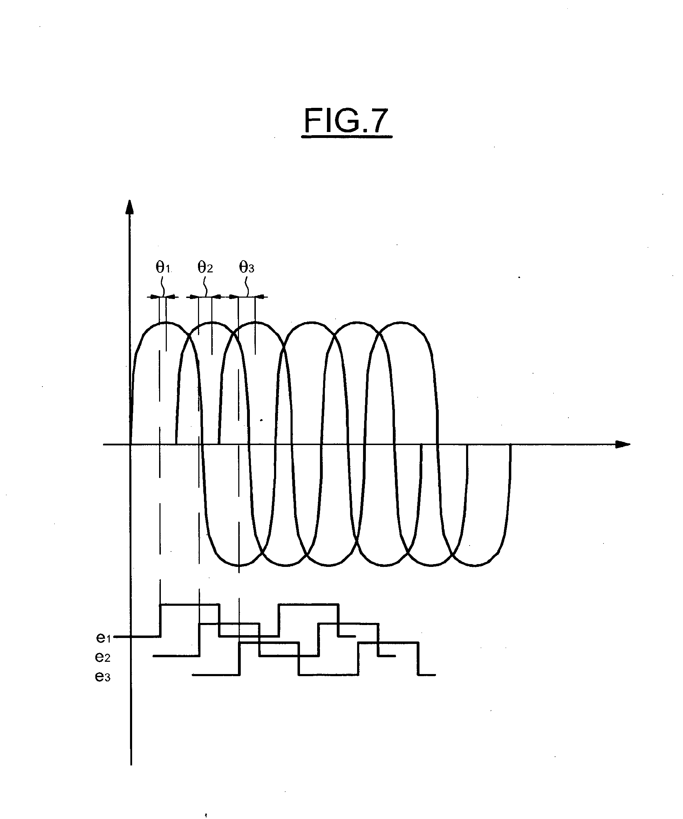

A cet égard, on entraîne en rotation, à vitesse constante, le moteur 30 par l'intermédiaire d'un organe d'entraînement extérieur (non représenté), par exemple à un moteur externe. Ensuite, on recueille les signaux sinusoïdaux U, V, W émis par les phases du stator 50 du moteur, comme illustré sur la figure 7 représentant l'évolution desdits signaux en fonction du temps. Les signaux émis se présentent ici sous la forme de signaux sinusoïdaux dont la fréquence est représentative de la vitesse de rotation du rotor du moteur.

Simultanément, on recueille les signaux e1, e2 et e3 émis par les éléments capteurs 15 de l'ensemble de détection 3 qui se présentent sous la forme de signaux de forme carrée. On compare ensuite les signaux émis par le stator 50 du moteur à ceux émis par les éléments capteurs 15 du palier 1 à roulement instrumenté pour calculer l'angle de décalage entre les signaux émis.

A cet effet, il est possible de considérer un front de montée d'un des signaux émis par les éléments capteurs 15 et de le comparer à l'amplitude maximale du signal émis par la phase correspondante du stator du moteur afin de déterminer un angle θₙ avec n = 1, 2 ou 3. On effectue cette opération pour chacune des phases du stator 50 du moteur. On déduit ensuite l'angle de décalage existant entre la position angulaire des éléments capteurs 15 par rapport aux pôles du stator 50, par exemple par minimisation de la somme des carrés des écarts θₙ.

On déplace alors en rotation le bloc capteur 11 à l'intérieur du support 12 autour de l'axe 1a d'une valeur égale à l'angle de décalage déterminé, de manière à optimiser le positionnement relatif des éléments capteurs 15 par rapport aux phases du stator 50 du moteur. Ainsi, on modifie la position angulaire des éléments capteurs 15 par rapport à la bague non tournante 4 jusqu'à la position de réglage souhaitée. Dans cette position, le front de montée de chacun des signaux émis par les éléments capteurs 15 correspond sensiblement au maximum de l'amplitude du signal correspondant émis par la phase associée du stator 50. On considère ce front de montée comme un signal de référence. En moyennant l'erreur des éléments capteurs 15 par rapport aux phases du stator 50 du moteur, on optimise le réglage du palier 1 à roulement.

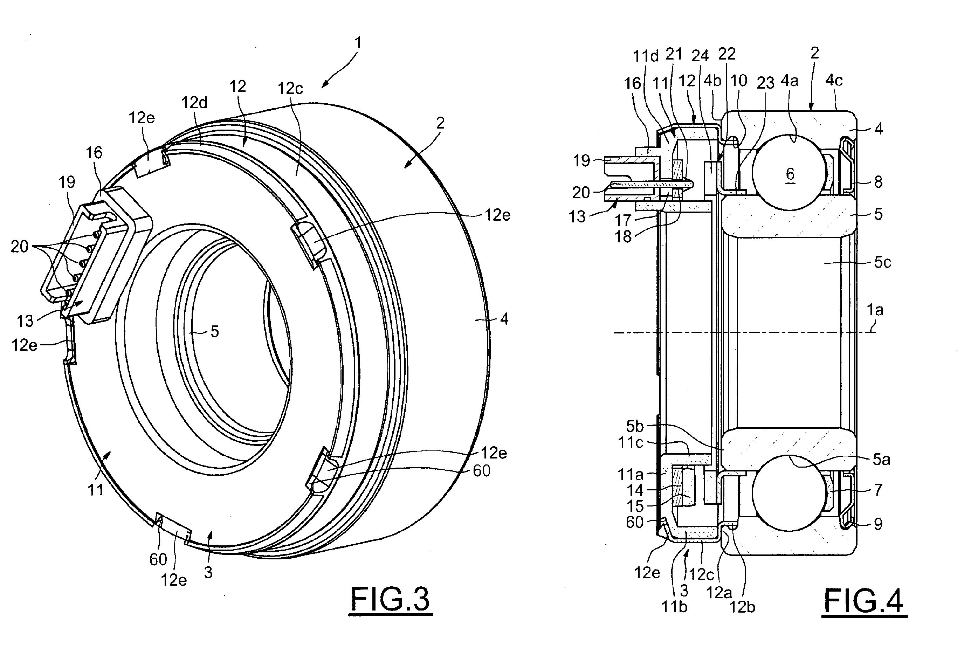

Une fois que cette position idéale est atteinte, on déforme mécaniquement le rebord 12d localement de manière à repousser la tôle pour former des protubérances 12e radiales de fixation (figures 3 et 4) dirigées vers l'intérieur en saillie à l'intérieur d'encoches 60 ménagées sur la portion tronconique 11d du bloc capteur 11. Les encoches 60 et les protubérances 12e sont ici au nombre de six, en étant réparties de manière uniforme sur la circonférence du bloc capteur 11 et du rebord 12d du support 12, respectivement.

Dans le mode de réalisation illustré sur les figures 3 et 4, les protubérances 12e formant moyens de solidarisation angulaire du bloc capteur 11 et du support 12 sont obtenues par sertissage de façon particulièrement économique, par exemple avec un outil de sertissage muni de dents appropriées. En effet, le support 12 est réalisé en tôle d'épaisseur mince, ce qui favorise une déformation plastique locale aisée.

Grâce à l'invention, on peut simplifier considérablement les procédés de montage des moteurs synchrones sans balais en évitant chez les constructeurs le montage et l'indexation de composants de détection à la fois sur le stator et sur le rotor et en offrant la possibilité d'optimiser l'indexation du palier 1 à roulement instrumenté.

En effet, dans un premier temps, la position relative angulaire du bloc capteur 11 et du support 12 est préétablie, puis on déforme le support 12 de manière à former le rebord 12d qui permet également la retenue axiale du bloc capteur 11 à l'intérieur du support 12. Une fois le palier 1 à roulement monté sur le moteur, on peut procéder à un réglage particulièrement précis de la position angulaire relative de ces deux éléments par comparaison de signaux électriques, puis on forme les protubérances 12e de manière à venir fixer cette position.

Dans le mode de réalisation précédemment décrit, le palier à roulement instrumenté 1 est prévu avec une bague non tournante extérieure et une bague tournante intérieure.

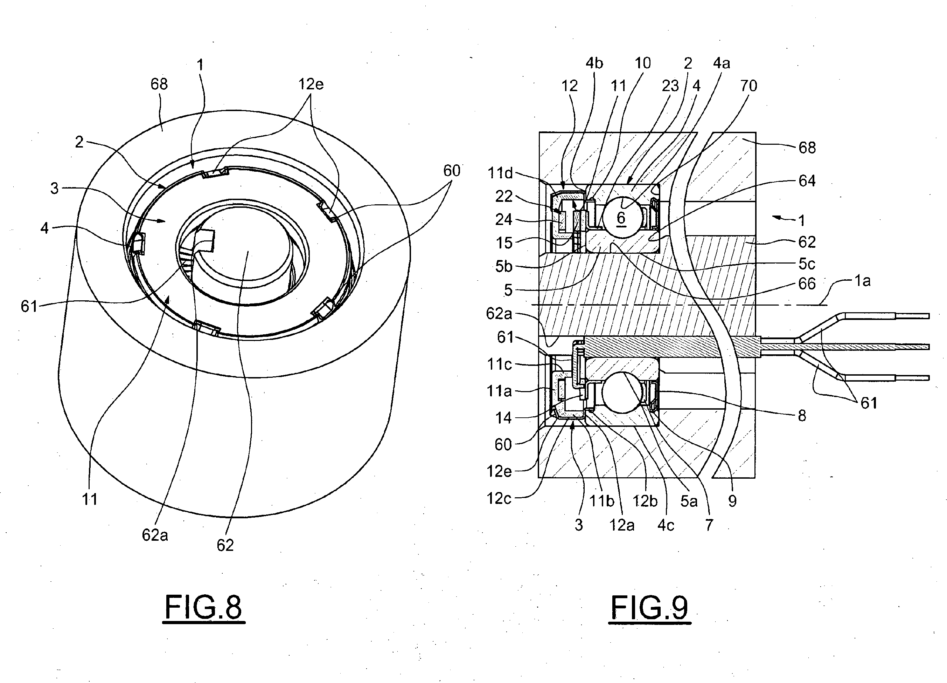

Alternativement, le palier à roulement instrumenté 1 peut être prévu avec une bague tournante 4 extérieure et une bague non tournante 5 intérieure comme illustré sur la variante de réalisation des figures 8 et 9 sur lesquelles les éléments identiques portent les mêmes références.

Dans cette variante de réalisation, la partie active 24 de l'élément codeur 22 est disposée dans le fond de l'espace annulaire défini par le bloc 11 et vient en contact contre la portion radiale 11a dudit bloc. Le bloc 11 forme ici un bloc codeur. La carte de circuit imprimé 14 est quant à elle fixée sur la portion radiale du support 23. La carte de circuit imprimé 14 supporte les éléments capteur 15, ici au nombre de trois, un seul étant visible sur la figure 9. La carte de circuit imprimé 14 et les éléments capteurs 15 sont en légère saillie axiale par rapport à la bague 5 intérieure non tournante et sont disposés radialement dans l'espace délimité par les portions axiales de grand diamètre 11b et de petit diamètre 11c du bloc codeur 11. Les éléments capteur 15 et la partie active 24 de l'élément codeur sont séparés par un faible entrefer axial.

Pour permettre la transmission de signaux en provenance des capteurs 15 à un circuit électronique de traitement, le palier à roulement 1 comporte des câbles 61 de connexion s'étendant axialement dans l'alésage 5c de la bague 5 intérieure en venant en contact avec celui-ci et comportant une portion radiale s'étendant jusqu'au logement défini par le bloc 11 codeur de manière à être reliés aux éléments capteur 15.

Dans la variante de réalisation illustrée aux figures 8 et 9, le palier à roulement 1 pourrait être destiné par exemple à une roue pour bicyclette à assistance électrique. Le palier à roulement 1 est monté ici sur un arbre fixe 62 comportant un épaulement 64 suivi d'une portion cylindrique 66 de plus faible diamètre. Pour permettre le passage des câbles 61 de connexion vers l'extérieur, l'arbre 62 comporte une rainure 62a débouchant à chaque extrémité axiale dudit arbre et à l'intérieur de laquelle s'étendent les câbles 61.

L'alésage 5c de la bague intérieure non tournante du palier 1 à roulement est reçu sur la portion cylindrique 66, une surface frontale radiale de ladite bague venant en appui contre l'épaulement 64. Une surface frontale radiale de la bague extérieure 4 tournante est quant à elle montée dans un boîtier ou logement 68 tournant en contact d'un épaulement 70 prévu sur ledit logement. Le palier à roulement 1 est entièrement monté à l'intérieur du logement 68.

Bien que dans les modes de réalisation illustrés, les moyens de solidarisation angulaire du bloc capteur 11 et du support 12 soient obtenus par des déformations locales du rebord 12d de manière à former les protubérances 12e, on conçoit aisément qu'il est également possible, sans sortir du cadre de l'invention, de prévoir une déformation de l'ensemble du rebord 12d pour réaliser la fixation angulaire relative du bloc capteur ou codeur 11 et du support 12. Il est également possible de prévoir une déformation radiale et/ou axiale du support 12 par poinçonnage de manière à former des saillies coopérant avec des évidements du bloc capteur pour la solidarisation angulaire du support 12 et du bloc capteur 11.

## Revendications

1. Dispositif de roulement instrumenté (1) comprenant une bague tournante (5; 4), une bague non tournante (4; 5), une rangée d'éléments roulants (6), et un ensemble de détection (3) de paramètres de rotation muni d'un bloc (11) capteur réalisé en matière synthétique comprenant au moins un premier élément (15; 22) pour la détection des paramètres de rotation, d'un support (12) du bloc capteur fixé sur l'une des bagues, et d'un second élément (22; 15) monté sur l'autre bague en regard du premier élément (15; 22), lesdites bagues comprenant chacune un chemin de roulement (4a, 5a) pour les éléments roulants, les premier et second éléments étant mobiles à rotation l'un relativement à l'autre autour d'un axe (1a) du dispositif, le bloc (11) capteur étant monté à l'intérieur du support (12) en étant mobile angulairement autour de l'axe (1a) par rapport audit support et auxdites bagues comprenant les chemins de roulement en vue d'une immobilisation de la position angulaire relative du bloc (11) capteur et du support (12) dans une position de réglage choisie, **caractérisé en ce que** le support (12) se présente sous la forme d'une coupelle annulaire réalisée en matière métallique et comprend une portion radiale (12a) disposée axialement entre le bloc (11) capteur et la bague sur laquelle est fixé ledit support, le support comprenant des moyens d'indexation angulaire (12e) aptes à coopérer avec des moyens d'indexation angulaire complémentaires (60) du bloc capteur (11) pour immobiliser la position angulaire relative du bloc (11) capteur à l'intérieur dudit support (12) dans la position de réglage choisie, lesdits moyens d'indexation angulaire étant formés par ledit support.

2. Dispositif selon la revendication 1, dans lequel l'ensemble de détection (3) est muni d'une carte de circuit imprimé (14) supportant ledit premier élément (15; 22) pour la détection de paramètres de rotation et disposée dans le fond d'un espace annulaire en contact avec une portion radiale (11a) du bloc capteur, ledit espace étant ouvert en direction du roulement, ledit bloc (11) capteur comprenant une portion axiale (11b) de grand diamètre, une portion axiale (11c) de petit diamètre et la portion radiale (11a) reliant les portions axiales, lesdites portions axiales et la portion radiale délimitant l'espace annulaire ouvert.

3. Dispositif selon la revendication 1 ou 2, dans lequel les premier et second éléments sont respectivement des éléments capteur (15) et codeur (22), le support (12) étant fixé sur la bague non tournante (4).

4. Dispositif selon l'une quelconque des revendications précédentes, dans lequel les premier et second éléments sont respectivement des éléments codeur (22) et capteur (15), le support (12) étant fixé sur la bague tournante (5).

5. Dispositif selon l'une quelconque des revendications précédentes, dans lequel le support (12) comprend une portion axiale (12c) pour le centrage du bloc (11) capteur à l'intérieur du support, et un rebord (12d) replié vers l'intérieur pour obtenir au moins la solidarisation axiale du bloc (11) capteur et du support (12).

6. Dispositif selon 1a revendication 5, dans lequel le rebord (12d) replié comprend localement des protubérances (12e) en saillie vers l'intérieur formant les moyens d'indexation angulaire.

7. Dispositif selon la revendication 6, dans lequel le bloc (11) capteur comprend des encoches (60) aptes à coopérer avec les protubérances (12e) formées à partir du rebord (12d).

8. Dispositif selon l'une quelconque des revendications précédentes, dans lequel la bague (4), sur laquelle est monté le support (12), comprend une rainure (10) ménagée sur son alésage et apte à permettre la fixation du bloc (11) capteur sur ladite bague (4).

9. Moteur électrique de type synchrone comprenant un dispositif de roulement instrumenté selon l'une quelconque des revendications précédentes.

10. Procédé de montage d'un dispositif de roulement instrumenté sur un arbre, le dispositif comprenant une bague tournante, une bague non tournante, une rangée d'éléments roulants (6), et un ensemble de détection de paramètres de rotation muni d'un bloc capteur réalisé en matière synthétique et comprenant au moins un premier élément pour la détection des paramètres de rotation, d'un support du bloc capteur fixé sur l'une des bagues, et d'un second élément monté sur l'autre bague en regard du premier élément, lesdites bagues comprenant chacune un chemin de roulement (4a, 5a) pour les éléments roulants, les premier et second éléments étant mobiles à rotation l'un relativement à l'autre autour d'un axe du dispositif, **caractérisé en ce que**, après montage sur l'arbre, on fait tourner le bloc capteur à l'intérieur du support par rapport aux bagues comprenant les chemins de roulement jusqu'à obtenir un positionnement relatif angulaire choisi du premier élément et de la bague associée, puis on solidarise angulairement le bloc capteur et le support par déformation mécanique d'une portion axiale du support pour former des protubérances de fixation du bloc capteur, le support comprenant une portion radiale (12a) disposée axialement entre le bloc capteur et la bague sur laquelle est fixé ledit support.

11. Procédé selon la revendication 10, dans lequel, avant montage sur l'arbre, on déforme légèrement la portion axiale du support pour former un rebord replié apte à solidariser axialement le bloc capteur et le support tout en autorisant le déplacement angulaire relatif dudit bloc capteur et du support.

12. Procédé selon l'une quelconque des revendications 10 ou 11, dans lequel on monte le dispositif sur un arbre d'un moteur électrique de type synchrone comportant un rotor et un stator.

13. Procédé selon la revendication 12, dans lequel, avant la solidarisation angulaire du bloc capteur et du support, on entraîne en rotation le moteur électrique par un organe d'entraînement extérieur, on recueille les signaux émis par le stator du moteur et par le ou les premiers éléments pour la détection des paramètres de rotation du dispositif de roulement, on compare les signaux émis, on calcule l'angle de décalage entre les signaux émis par le stator du moteur et les signaux émis par le ou les premiers éléments pour la détection des paramètres de rotation, et on fait tourner le bloc capteur à l'intérieur du support d'une valeur égale à l'angle de décalage déterminé.

## Patentansprüche

1. Instrumentierte Wälzlagervorrichtung (1), die einen drehenden Ring (5; 4), einen nicht drehenden Ring (4; 5), eine Reihe von Wälzelementen (6) und eine Erfassungseinheit (3) von Drehparametern enthält, die mit einem Sensorblock (11) aus Kunststoff, der mindestens ein erstes Element (15; 22) zur Erfassung der Drehparameter enthält, mit einem Träger (12) des Sensorblocks, der an einem der Ringe befestigt ist, und mit einem zweiten Element (22; 15) versehen ist, das auf den anderen Ring gegenüber dem ersten Element (15; 22) montiert ist, wobei die Ringe je eine Wälzbahn (4a, 5a) für die Wälzelemente enthalten, wobei das erste und das zweite Element um eine Achse (1a) der Vorrichtung zueinander drehbeweglich sind, wobei der Sensorblock (11) im Inneren des Trägers (12) montiert ist, indem er um die Achse (1a) bezüglich des Trägers und der die Wälzbahnen enthaltenden Ringe winkelmäßig beweglich ist, um die relative Winkelposition des Sensorblocks (11) und des Trägers (12) in einer gewählten Einstellposition zu fixieren, **dadurch gekennzeichnet, dass** der Träger (12) in Form einer ringförmigen Schale vorliegt, die aus Metall hergestellt ist und einen radialen Abschnitt (12a) enthält, der axial zwischen dem Sensorblock (11) und dem Ring angeordnet ist, an dem der Träger befestigt ist, wobei der Träger Winkelindexierungseinrichtungen (12e) enthält, die mit komplementären Winkelindexierungseinrichtungen (60) des Sensorblocks (11) zusammenwirken können, um die relative Winkelposition des Sensorblocks (11) im Inneren des Trägers (12) in der gewählten Einstellposition zu fixieren, wobei die Winkelindexierungseinrichtungen von dem Träger gebildet werden.

2. Vorrichtung nach Anspruch 1, wobei die Erfassungseinheit (3) mit einer Leiterplatte (14) versehen ist, die das erste Element (15; 22) zur Erfassung von Drehparametern trägt und am Boden eines Ringraums in Kontakt mit einem radialen Abschnitt (11a) des Sensorblocks angeordnet ist, wobei der Raum in Richtung des Wälzlagers offen ist, wobei der Sensorblock (11) einen axialen Abschnitt (11b) großen Durchmessers, einen axialen Abschnitt (11c) kleinen Durchmessers und den radialen Abschnitt (11a) enthält, der die axialen Abschnitte verbindet, wobei die axialen Abschnitte und der radiale Abschnitt den offenen Ringraum begrenzen.

3. Vorrichtung nach Anspruch 1 oder 2, wobei das erste und das zweite Element Sensor- (15) bzw. Codierelemente (22) sind, wobei der Träger (12) am nicht drehenden Ring (4) befestigt ist.

4. Vorrichtung nach einem der vorhergehenden Ansprüche, wobei das erste und das zweite Element Codier- (22) bzw. Sensorelemente (22) sind, wobei der Träger (12) am drehenden Ring (5) befestigt ist.

5. Vorrichtung nach einem der vorhergehenden Ansprüche, wobei der Träger (12) einen axialen Abschnitt (12c) zur Zentrierung des Sensorblocks (11) im Inneren des Trägers und eine Randleiste (12d) enthält, die nach innen umgebogen ist, um mindestens die feste axiale Verbindung des Sensorblocks (11) und des Trägers (12) zu erhalten.

6. Vorrichtung nach Anspruch 5, wobei die umgebogene Randleiste (12d) lokal nach innen vorstehende Vorsprünge (12e) enthält, die die Winkelindexierungseinrichtungen bilden.

7. Vorrichtung nach Anspruch 6, wobei der Sensorblock {11) Aussparungen (60) enthält, die mit den ausgehend von der Randleiste (12d) gebildeten Vorsprüngen (12e) zusammenwirken können.

8. Vorrichtung nach einem der vorhergehenden Ansprüche, wobei der Ring (4), auf den der Träger (12) montiert ist, eine Rille (10) enthält, die auf seiner Bohrung ausgespart ist und die Befestigung des Sensorblocks (11) am Ring (4) ermöglichen kann.

9. Elektromotor von der Art Synchronmotor, der eine instrumentierte Wälzlagervorrichtung nach einem der vorhergehenden Ansprüche enthält.

10. Vorrichtung zur Montage einer instrumentierten Wälzlagervorrichtung auf eine Welle, wobei die Vorrichtung einen drehenden Ring, einen nicht drehenden Ring, eine Reihe von Wälzelementen (6) und eine Erfassungseinheit (3) von Drehparametern enthält, die mit einem Sensorblock, der aus Kunststoff hergestellt ist und mindestens ein erstes Element zur Erfassung der Drehparameter enthält, mit einem Träger des Sensorblocks, der an einem der Ringe befestigt ist, und mit einem zweiten Element versehen ist, das auf den anderen Ring gegenüber dem ersten Element montiert ist, wobei die Ringe je eine Wälzbahn (4a, 5a) für die Wälzelemente enthalten, wobei das erste und das zweite Element um eine Achse der Vorrichtung zueinander drehbeweglich sind, **dadurch gekennzeichnet, dass** der Sensorblock nach der Montage auf die Welle im Inneren des Trägers bezüglich der die Wälzbahnen enthaltenden Ringe gedreht wird, bis eine gewählte relative Winkelpositionierung des ersten Elements und des zugeordneten Rings erhalten wird, dann der Sensorblock und der Träger durch mechanische Verformung eines axialen Abschnitts des Trägers winkelmäßig fest verbunden werden, um Befestigungsvorsprünge des Sensorblocks zu bilden, wobei der Träger einen radialen Abschnitt (12a) enthält, der axial zwischen dem Sensorblock und dem Ring angeordnet ist, an dem der Träger befestigt ist.

11. Verfahren nach Anspruch 10, wobei der axiale Abschnitt des Trägers vor der Montage auf die Welle leicht verformt wird, um eine umgebogene Randleiste zu bilden, die den Sensorblock und den Träger axial fest verbinden kann und gleichzeitig die relative Winkelverschiebung des Sensorblocks und des Trägers erlaubt.

12. Verfahren nach einem der Ansprüche 10 oder 11, wobei die Vorrichtung auf eine Welle eines Elektromotors von der Art Synchronmotor montiert wird, der einen Rotor und einen Stator aufweist.

13. Verfahren nach Anspruch 12, wobei der Elektromotor vor der festen winkelmäßigen Verbindung des Sensorblocks und des Trägers von einem externen Antriebsorgan in Drehung versetzt wird, die vom Stator des Motors und von dem oder den ersten Elementen zur Erfassung der Drehparameter der Wälzvorrichtung gesendeten Signale erfasst werden, die gesendeten Signale verglichen werden, der Verschiebungswinkel zwischen den vom Stator des Motors gesendeten Signalen und den von dem oder den ersten Elementen zur Erfassung der Drehparameter gesendeten Signale berechnet wird, und der Sensorblock im Inneren des Trägers um einen Wert gleich dem bestimmten Verschiebungswinkel gedreht wird.

## Claims

1. Instrumented bearing device (1) including a rotating ring (5; 4), a non-rotating ring (4; 5), a row of rolling elements (6), and a system (3) for detecting rotation parameters provided with a sensor block (11) made of synthetic material including at least a first element (15; 22) for the detection of the rotation parameters, a support (12) of the sensor block fixed to one of the rings, and a second element (22; 15) mounted on the other ring facing the first element (15; 22), said rings each including a raceway (4a, 5a) for the rolling elements, the first and second elements being mobile in rotation relative to each other about an axis (1a) of the device, the sensor block (11) being mounted inside the support (12) and mobile angularly about the axis (1a) relative to said support and to said rings including the raceways in order to immobilise the relative angular position the sensor block (11) and the support (12) in a chosen adjustment position, **characterized in that** the support (12) takes the form of an annular cup made of metal and includes a radial portion (12a) disposed axially between the sensor block (11) and the ring to which said support is fixed, the support including angular indexing means (12e) adapted to cooperate with complementary angular indexing means (60) of the sensor block (11) to immobilise the relative angular position of the sensor block (11) inside said support (12) in the chosen adjustment position, said angular indexing means being formed by said support.

2. Device according to Claim 1, wherein the detection system (3) is provided with a printed circuit card (14) supporting said first element (15; 22) for the detection of rotation parameters and disposed at the bottom of an annular space in contact with a radial portion (11a) of the sensor block, said space being open in the direction of the bearing, said sensor block (11) including an axial portion (11b) of large diameter, an axial portion (11c) of small diameter and the radial portion (11a) connecting the axial portions, said axial portions and the radial portion delimiting the open annular space.

3. Device according to Claim 1 or 2, wherein the first and second elements are respectively a sensor element (15) and a coder element (22), the support (12) being fixed to the non-rotating ring (4).

4. Device according to any one of the preceding claims, wherein the first and second elements are respectively a coder element (22) and a sensor element (15), the support (12) being fixed to the rotating ring (5).

5. Device according to any one of the preceding claims, wherein the support (12) includes an axial portion (12c) for centring the sensor block (11) inside the support and a rim (12d) bent inwards to obtain at least the axial fastening together of the sensor block (11) and the support (12).

6. Device according to Claim 5, wherein the bent rim (12d) locally includes protuberances (12e) projecting inwards forming the angular indexing means.

7. Device according to Claim 6, wherein the sensor block (11) includes notches (60) adapted to cooperate with the protuberances (12e) formed from the rim (12d).

8. Device according to any one of the preceding claims, wherein the ring (4), on which the support (12) is mounted, includes a groove (10) in its bore adapted to enable the fixing of the sensor block (11) to said ring(4).

9. Synchronous electric motor including an instrumented bearing device according to any one of the preceding claims.

10. Method of mounting an instrumented bearing device on a shaft, the device including a rotating ring, a non-rotating ring, a row of rolling elements (6), and a system for detection of rotation parameters provided with a sensor block made of synthetic material and including at least a first element for the detection of the rotation parameters, a support of the sensor block fixed to one of the rings, and a second element mounted on the other ring facing the first element, said rings each including a raceway (4a, 5a) for the rolling elements, the first and second elements being mobile in rotation relative to each other about an axis of the device, **characterized in that**, after mounting on the shaft, the sensor block is turned inside the support relative to the rings including the raceways until a chosen relative angular position of the first element and the associated ring is obtained, after which the sensor block and the support are angularly fastened together by mechanical deformation of an axial portion of the support to form protuberances for fixing the sensor block, the support including a radial portion (12a) disposed axially between the sensor block and the ring to which said support is fixed.

11. Method according to Claim 10, wherein, before mounting on the shaft, the axial portion of the support is slightly deformed to form a bent rim adapted to fasten the sensor block and the support axially together at the same time as allowing relative angular movement of said sensor block and the support.

12. Method according to either one of Claims 10 or 11, wherein the device is mounted on a shaft of a synchronous electric motor including a rotor and a stator.

13. Method according to Claim 12, wherein, before the angular fastening together of the sensor block and the support, the electric motor is driven in rotation by an external drive member, the signals emitted by the stator of the motor and by the first element or elements for the detection of the rotation parameters of the bearing device are collected, the signals emitted are compared, the offset angle between the signals emitted by stator of the motor and the signals emitted by the first element or elements for the detection of the rotation parameters is calculated, and the sensor block is turned inside the support by an amount equal to the offset angle so determined.
